# EUROPEAN PATENT SPECIFICATION

(11) **EP 1 133 403 B1**
(45) Date of publication and mention of the grant of the patent: **23.06.2004**
(21) Application number: 99954231.9
(22) Date of filing: 11.11.1999
(51) Int. Cl.: B60K 15/04

(54) **MOTOR VEHICLE FUEL TANK ASSEMBLY**
KRAFTSTOFFTANKANORDNUNG FÜR KRAFTFAHRZEUG
ENSEMBLE RESERVOIR DE CARBURANT POUR VEHICULES A MOTEUR

(30) Priority: 28.11.1998 GB 9826074; 28.11.1998 GB 9826072
(43) Date of publication of application: 19.09.2001
(73) Proprietor: Bayerische Motoren Werke Aktiengesellschaft, 80788 München (DE); RAVIV PRECISION INJECTION MOLDING, D.N. Halutza 85515 (IL)
(72) Inventor: BIBBY, Christopher, John, Bromsgrove, Worcestershire B61 7NS (GB)
(74) Representative: Schmidt, Günter, Dipl.-Ing.
(86) International application number: PCT/GB1999/003770
(87) International publication number: WO 2000/032431

(56) References cited:
- EP-A- 0 437 053
- EP-A- 0 714 800
- EP-A- 0 792 767
- EP-A- 0 864 456
- FR-A- 2 777 229
- US-A- 5 590 697

## Description

The invention relates to a inlet check valve for use in a fuel tank assembly for motor vehicles according to the preamble of claim 1. A typical fuel tank assembly comprises a fuel tank, a filler neck, a filler pipe connecting the filler neck to the fuel tank and an inlet check valve at the base of the filler pipe to prevent a back flow of fuel from the tank through the filler pipe. A regular function of the check valve is to prevent blow-back when the fuel tank is being replenished at a fuel filling station and to meet this requirement alone the design can be relatively simple. However, for safety in the event of a vehicle crash which causes the filler pipe to be fractured or torn away, there is a requirement for the inlet check valve to remain firmly sealed. This creates design problems in that the inlet check valve must open under the limited pressure available from the head of fuel in the filler pipe. Whilst some design proposals can achieve this, there has been a problem that the fuel, where it enters the fuel tank through the inlet check valve, sprays in several directions, causing gases to be released from the fuel. This creates a back pressure in the fuel tank and increases hydrocarbon emissions. Where such emissions are removed by special equipment such as carbon filters, the size and cost of the equipment is increased.

Document EP-A- 0 714 800 discloses an inlet check valve according to the preamble of claim 1.

It is an object of the invention to provide a fuel tank assembly for a motor vehicle in which the abovementioned problems are overcome or alleviated.

According to the invention there is provided an inlet check valve as defined in claim 1.

The valve member comprises a plunger. The plunger may be substantially coaxial with the filler pipe where it joins the tank. The plunger has a head with a profiled surface to deflect fuel towards the discharge orifice. Preferably, the profiled surface is concave.

The fuel tank assembly may further comprise an auxiliary check valve in or adjacent the inlet check valve and arranged to admit fuel from the filler pipe into the fuel tank at a lower pressure.

The invention also provides, according to a second aspect, a fuel tank assembly for a motor vehicle and comprising a fuel tank, a filler neck, a filler pipe connecting the filler neck to the fuel tank and an inlet check valve at the lower end of the filler pipe to prevent a back flow of fuel from the tank through the filler pipe, the inlet check valve having a discharge orifice which is normally closed by a valve member which is in use movable against a spring bias by the pressure of fuel in the filler pipe, and an auxiliary check valve in or adjacent the inlet check valve and arranged to admit fuel from the filler pipe into the fuel tank at a lower pressure.

The auxiliary check valve may be in the valve member, in which case the valve member may incorporate an elastomeric seal. The elastomeric seal may seat on a frusto-conical surface of the discharge orifice.

The auxiliary check valve may comprise a poppet having a head which is spring biased against an auxiliary valve orifice, in which case the auxiliary valve orifice may be in the valve member. The poppet head may incorporate an elastomeric seal which may seat on a frusto-conical surface of the auxiliary valve orifice.

The invention will now be described by way of example and with reference to the accompanying drawings, in which:-
Fig.1 is a simplified diagrammatic cross-section of a fuel tank assembly according to the invention;
Fig.2 is a cross-section through the base of a filler pipe and an inlet check valve of the assembly shown in Fig.1;
Fig. 3 is a view similar to Fig.2 showing an alternative inlet check valve;
Fig.4 is a view similar to Fig.3 showing the alternative inlet check valve in an open condition; and
Fig.5 is a cross-section on the line V-V in Fig.4.

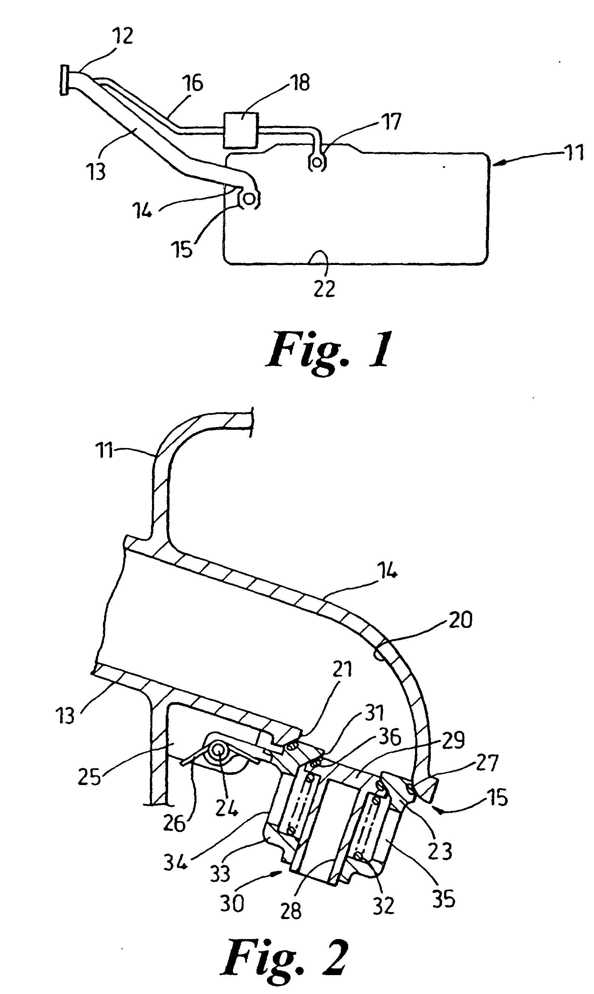

Referring to Fig.1 and Fig.2, a motor vehicle fuel tank assembly comprises a fuel tank 11, filler neck 12 and a filler pipe 13 connecting the filler neck to the tank. At the lower end 14 of the filler pipe 13 there is an inlet check valve 15 to prevent a back flow of fuel from the tank 11 through the filler pipe. A breather pipe 16 connects an air space above the level of fuel in the fuel tank 11 to the filler neck 12 through a breather check valve 17 and a carbon filter 18.

The inlet check valve 15 has a discharge orifice 21 which faces towards the base 22 of the tank 11 and this is normally closed by a valve member in the form of a hinged flap 23 which is pivoted at 24 to a support web 25 on the tank 11. A hairpin-type spring 26 is provided to spring bias the flap 23 against the discharge orifice 21. The interengaging surfaces of the discharge orifice 21 and the hinged flap 23 are frusto-conical and sealed by an elastomeric seal 27.

The hinged flap 23 incorporates an auxiliary check valve 30 comprising a poppet 28 having a head 29 which is biased against an orifice 31 in the hinged flap 23 by a helical spring 32. To support the helical spring 32 and provide a guide for the poppet 28, the hinged flap has a flanged boss 33 which is supported by a generally cylindrical portion 34 having apertures 35. The interengaging surfaces of the poppet head 29 and the orifice 31 are also frusto-conical and sealed by another elastomeric seal 36.

In use the pressure derived from the head of fuel entering the filler pipe 13 through the filler neck 12 acts on the hinged flap 23 so that it pivots against the bias of the hairpin spring 26. Above the discharge orifice 21, the lower end 14 of the filler pipe 13 has a profiled wall portion 20 having a generally concave surface so that the flow of incoming fuel is diverted towards the base of the tank in a single stream, particularly under high flow conditions when the flap 23 can move to one side of this stream.

In order for the seal 27 on the hinged flap 23 to have sufficient sealing pressure against the opposing face of the discharge orifice 21, the hairpin spring 26 has to have a preload which is related to the circumference of the seal. If fuel enters the filler neck 12 at only a slow rate (trickle filling) there may be a tendency for the level of fuel to rise in the filler pipe 13. To prevent this the preload of the helical spring 32 of the auxiliary check valve 30 is considerably lower, this being possible because of the reduced circumference of the seal 36.

By encouraging the fuel to enter the tank as a single stream directed towards the base of the tank there is reduced turbulence of the fuel and a reduced amount of fuel spray in the air space above the fuel. This reduces the amount of gas released from the fuel so that the discharge through the breather pipe 16 is reduced.

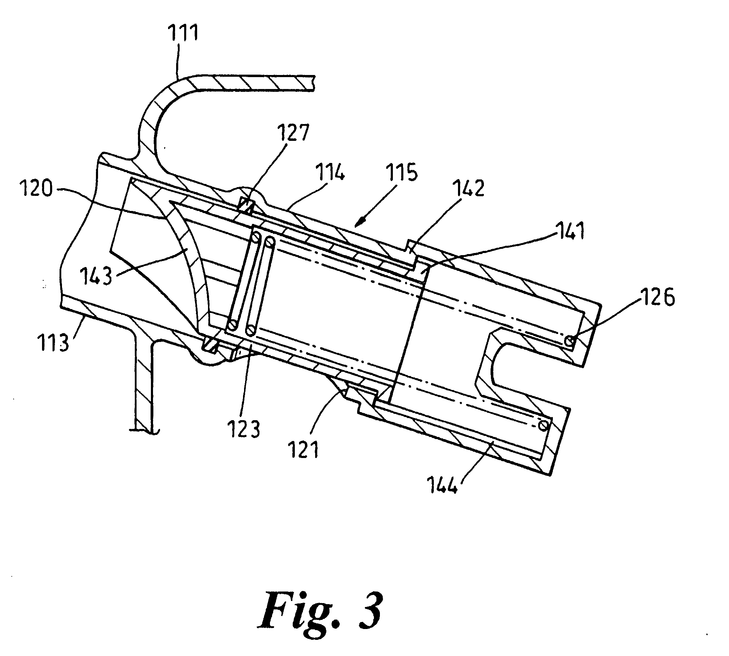

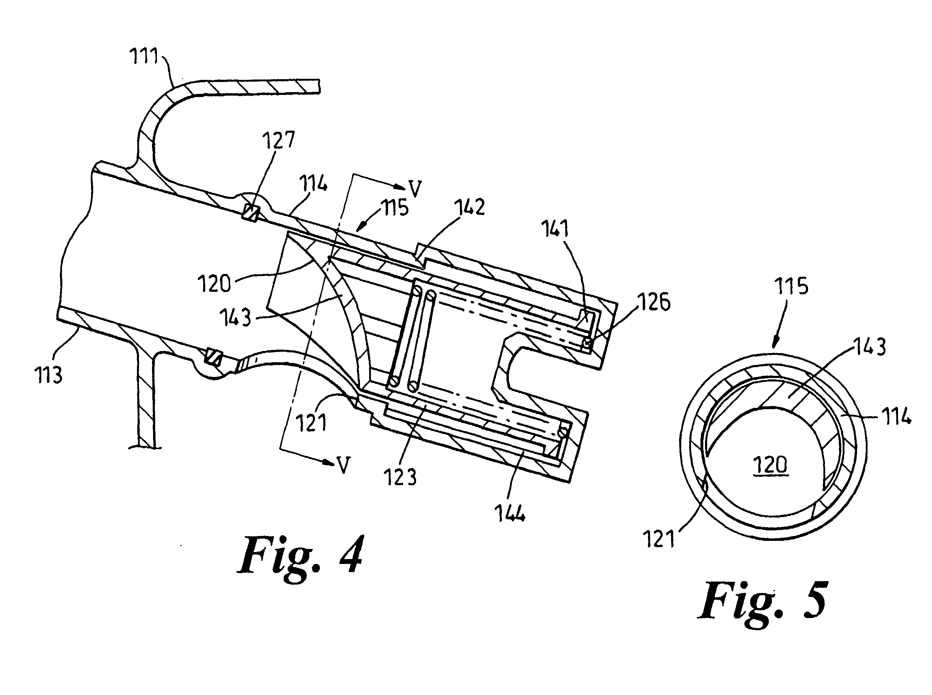

In Figs.3 to 5, the parts which are the same as or functionally similar to those in Fig.2 carry the same reference numeral as the corresponding or functionally equivalent parts in Figs.1 and 2 but with the addition of 100. The inlet check valve 115 at the lower end 114 of the filler pipe 113 has a valve member in the form of a plunger 123 which is coaxial with the breather pipe lower end 114. The plunger 123 is biased by a helical spring 126 to a position where an end flange 141 abuts a shoulder 142 and the plunger 123 is sealed in the ball of filler pipe lower end 114 by an elastomeric seal 127 to isolate the filler pipe 113 from the interior of the tank 111. The plunger 123 has a head 143 having a concave profiled surface 120.

In use the pressure derived from the head of fuel entering the filler pipe 113 acts on the plunger 123 to move it against the bias of spring 126 to uncover a discharge orifice 121, fuel from the filler pipe 113 being deflected downwards in a single stream towards the face of the tank 111. A rib 143 co-operates with a notch in the flange 141 to provide angular alignment for the profiled head 143.

If required, the plunger 123 may incorporate an auxiliary valve similar to the auxiliary check valve 30 shown in Fig.2. Alternatively, the auxiliary check valve 130 may be in a fixed part of the filler pipe lower end 114 adjacent the inlet check valve 115. Similarly, the inlet check valve 15 shown in Fig.2 may be modified to remove the auxiliary check valve 30 and put it or a functionally similar valve in an adjacent part of the filler pipe lower end 14.

## Claims

1. An inlet check valve (15, 115) arranged in a fuel tank assembly for a motor vehicle, the tank assembly comprising a fuel tank (11, 111), a filler neck (12), a filler pipe (13, 113) connecting the filler neck to the fuel tank, the inlet check valve (15, 115) being arranged at the lower end (14, 114) of the filler pipe to prevent a back flow of fuel from the tank through the filler pipe, the inlet check valve having a discharge orifice (21, 121) which faces towards the base (22) of the tank and which is normally closed by a valve member (23, 123) which is in use movable against a spring bias by the pressure of fuel in the filler pipe, the valve member and the orifice being arranged to divert the flow of incoming fuel towards the base of the tank in a single stream, and wherein the valve member comprises a plunger (123),
**characterised in that** the plunger has a head (143) with a profiled surface (120) to deflect fuel towards the discharge orifice (121).

2. An inlet check valve according to claim 1 wherein the plunger (123) is substantially coaxial with the filler pipe (113) where it joins the tank (111).

3. An An inlet check valve according to claim 1 or 2 wherein the profiled surface (120) is concave.

4. An inlet check valve according to any preceding claim wherein the valve member (123) incorporates an elastomeric seal (127).

5. An inlet check valve assembly according to any preceding claim and further comprising an auxiliary check valve in or adjacent the inlet check valve (115) and arranged to admit fuel from the filler pipe (13, 113) into the fuel tank (11) at a lower pressure.

6. An assembly according to claim 5 wherein the auxiliary check valve is in the valve member (123).

7. An inlet check valve assembly according to claim 5 or 6 wherein the auxiliary check valve comprises a poppet having a head which is spring biased against an auxiliary valve orifice.

8. An assembly according to claim 7 wherein the poppet head incorporates an elastomeric seal.

9. An assembly according to claim 8 wherein the poppet head elastomeric seal seats on a frusto-conical surface of the auxiliary valve orifice.

## Patentansprüche

1. Einlassrückschlagventil (15, 115), das zur Verwendung in einer Kraftstofftankanordnung für ein Kraftfahrzeug angeordnet ist, wobei die Tankanordnung Folgendes umfasst: einen Kraftstofftank (11, 111), einen Einfüllstutzen (12), ein Einfüllrohr (13, 113), das den Einfüllstutzen mit dem Kraftstofftank verbindet, wobei das Einlassrückschlagventil (15, 115) am unteren Ende (14, 114) des Einfüllrohrs angeordnet ist, um einen Kraftstoffrückstrom aus dem Tank durch das Einfüllrohr zu verhindern, wobei das Einlassrückschlagventil eine Ablassöffnung (21, 121) aufweist, die in Richtung der Basis (22) des Tanks weist und normalerweise durch ein Ventilelement (23, 123) geschlossen ist, das im Gebrauch durch den Druck des Kraftstoffs in dem Einfüllrohr gegen eine Federvorspannung bewegt werden kann, wobei das Ventilelement und die Öffnung derart angeordnet sind, dass sie die Strömung des eintretenden Kraftstoffs in einem einzigen Strom in Richtung der Basis des Tanks ablenken, und wobei das Ventilelement einen Kolben (123) umfasst,
**dadurch gekennzeichnet, dass** der Kolben einen Kopf (143) mit einer mit einem Profil versehenen Oberfläche (120) aufweist, um Kraftstoff in Richtung der Ablassöffnung (121) abzulenken.

2. Einlassrückschlagventil nach Anspruch 1, wobei der Kolben (123) dort im Wesentlichen koaxial zu dem Einfüllrohr (113) verläuft, wo es mit dem Tank (111) verbunden ist.

3. Einlassrückschlagventil nach Anspruch 1 oder 2, wobei die mit einem Profil versehene Oberfläche (120) konkav ist.

4. Einlassrückschlagventil nach einem der vorhergehenden Ansprüche, wobei das Ventilelement (123) eine Elastomerdichtung (127) umfasst.

5. Einlassrückschlagventilanordnung nach einem der vorhergehenden Ansprüche, die des Weiteren ein Zusatzrückschlagventil in oder benachbart zu dem Einlassrückschlagventil (115) umfasst, das so angeordnet ist, dass es Kraftstoff aus dem Einfüllrohr (13, 113) bei einem niedrigeren Druck in den Kraftstofftank (11) einlässt.

6. Anordnung nach Anspruch 5, wobei sich das Zusatzrückschlagventil in dem Ventilelement (123) befindet.

7. Einlassrückschlagventilanordnung nach Anspruch 5 oder 6, wobei das Zusatzrückschlagventil einen Teller mit einem Kopf umfasst, der mit Federkraft gegen eine Zusatzventilöffnung vorgespannt ist.

8. Anordnung nach Anspruch 7, wobei der Tellerkopf eine Elastomerdichtung umfasst.

9. Anordnung nach Anspruch 8, wobei die Elastomerdichtung des Tellerkopfs auf einer kegelstumpfförmigen Oberfläche der Zusatzventilöffnung sitzt.

## Revendications

1. Clapet de retenue d'entrée (15, 115) disposé dans un ensemble de réservoir de carburant pour véhicule à moteur, l'ensemble de réservoir comprenant un réservoir de carburant (11, 111), un goulot de remplis sage (12), un tuyau de remplissage (13, 113) reliant le goulot de remplissage au réservoir de carburant, le clapet de retenue d'entrée (15, 115) étant disposé à l'extrémité inférieure (14, 114) du tuyau de remplissage pour éviter un retour de carburant remontant du réservoir par le tuyau de remplissage, le clapet de retenue d'entrée comportant un orifice de décharge (21, 121) tourné vers la base (22) du réservoir et normalement fermé par un élément de clapet (23, 123) qui, en cours d'utilisation, peut se déplacer contre la poussée d'un ressort antagoniste, sous l'effet de la pression du carburant se trouvant dans le tuyau de remplissage, l'élément de clapet et l'orifice étant disposés pour dévier le débit de carburant qui arrive vers la base du réservoir, en un seul courant, et l'élément de clapet comprenant un plongeur (123),
**caractérisé en ce que**
le plongeur comporte une tête (143) munie d'une surface profilée (120) pour dévier le carburant vers l'orifice de décharge (121).

2. Clapet de retenue d'entrée selon la revendication 1,
dans lequel
le plongeur (123) est essentiellement coaxial avec le tuyau de remplissage (113) à l'endroit OÙ il rejoint le réservoir (111).

3. Clapet de retenue d'entrée selon la revendication 1 ou 2,
dans lequel
la surface profilée (120) est concave.

4. Clapet de retenue d'entrée selon l'une quelconque des revendications précédente5~
dans lequel
l'élément de clapet (123) incorpore un joint d'étanchéité en élastomère (127).

5. Ensemble de clapet de retenue d'entrée selon l'une quelconque des revendications précédentes, comprenant en outre
un clapet de retenue auxiliaire dans le clapet de retenue d'entrée (115) 5 ou adjacent à celui-ci, ce clapet de retenue auxiliaire étant disposé pour admettre dans le réservoir de carburant (11), à une pression plus basse, le carburant provenant du tuyau de remplissage (13, 113).

6. Ensemble selon la revendication 5,
dans lequel
le clapet de retenue auxiliaire se trouve dans l'élément de clapet (123).

7. Ensemble de clapet de retenue d'entrée selon la revendication 5 ou 6,
dans lequel
le clapet de retenue auxiliaire comprend une tige de clapet munie d'une tête qui est poussée par un ressort contre un orifice de clapet auxiliaire.

8. Ensemble selon la revendication 7,
dans lequel
la tête de tige de clapet incorpore un joint d'étanchéité en élastomère.

9. Ensemble selon la revendication 8,
dans lequel
le joint d'étanchéité en élastomère de la tête de tige de clapet vient s'appuyer sur une surface tronconique de l'orifice de clapet auxiliaire.
